# EUROPEAN PATENT APPLICATION

(11) **EP 0 533 328 A1**
(43) Date of publication of application: **24.03.1993**
(21) Application number: 92306992.6
(22) Date of filing: 31.07.1992
(51) Int. Cl.: H01L 41/09, F16L 55/18

(54) **Ultrasonic motor driven apparatus**

(30) Priority: 17.09.1991 JP 236650/91
(71) Applicant: SEIKO INSTRUMENTS INC., Tokyo 136 (JP)
(72) Inventor: Suzuki, Makoto, c/o Seiko Instruments In., Tokyo (JP); Tsukada, Nobuo, Tokyo (JP); Horikoshi, Ichiro, Tokyo (JP); Ozawa, Fujio, Tokyo (JP); Kasuga, Masao, Tokyo (JP)
(74) Representative: Sturt, Clifford Mark

(57) **Abstract**

Motor-driven apparatus comprising drivable surface-contact means (6,106) engageable with a surface over which the apparatus is to be moved; at least one motor (3,4; 103,104) arranged to drive the surface-contact means (6,106) so as to move the apparatus over the surface in a desired direction or directions; a driving circuit (71) carried by the apparatus and arranged to output drive signals to the or each motor (3,4; 103,104) so as to control movement of the apparatus over the surface characterised in that the or each motor is an ultrasonic motor, the driving circuit (71) being arranged to receive radio control signals from a remote location.

## Description

This invention relates to a motor-driven apparatus or travelling equipment and, although the invention is not so restricted, it relates more particularly to a compact size apparatus utilizing ultrasonic motors so as to be capable of travelling into restricted places which are too narrow for human hands, e.g. into a small and narrow pipe. It thus relates, inter alia, to a micro-traveller.

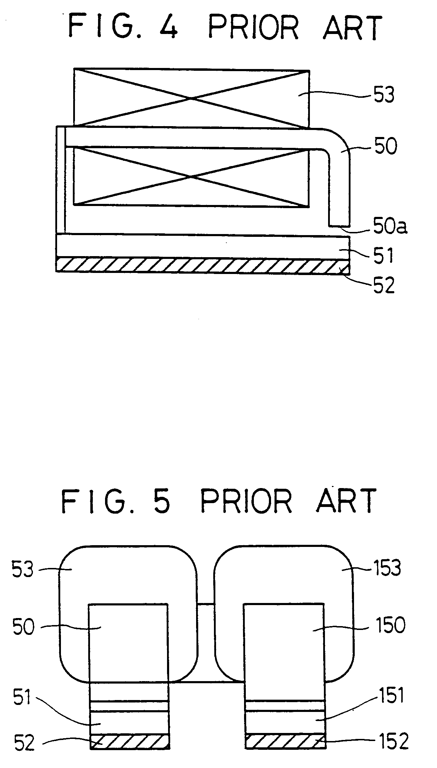

As shown in Figure 4, which is a sectional view, and Figure 5, which is a front view, the operation of a known electro-magnetic type motor-driven apparatus involved applying a predetermined voltage from a driving circuit (not shown) to a coil 53, whereby, a coil core 50 was magnetized. As a result, a tip of the coil core 50a was attracted to and repelled by a permanent magnet 51 so as to generate vibration. By applying this generated vibration to a diagonally extending brush 52, the latter is attracted into contact with the lower face of the permanent magnet 51 to advance the equipment in a certain direction. Figure 5 shows the equipment as having two parts, namely a left-hand part as described above and a right-hand part comprised of a coil core 150, a permanent magnet 151, a diagonally extending brush 152, and a coil 153, which are structured in the same way as those of the left-hand part. The two parts are connected in parallel. By controlling the two parts respectively, the direction of movement of the apparatus can be changed.

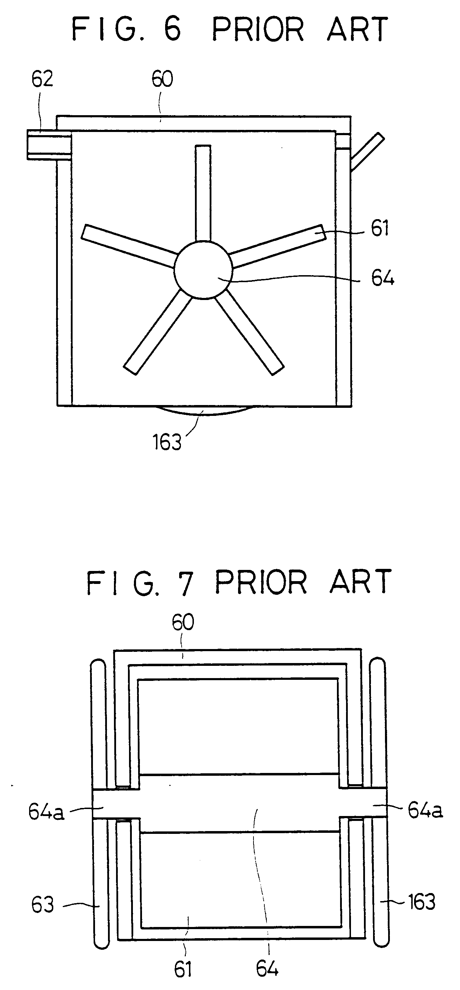

Figure 6 and Figure 7 show a sectional side view and a front view respectively of a known motor-driven apparatus. A plurality of blades 61 are attached to a shaft 64. A housing 60 enclosing the blades 61 is mounted on the shaft 64. Driving wheels 63 and 163 are attached to each of the ends 64a of the shaft 64 which project outwardly from the housing 60. Air is directed through a pipe 62 attached to the housing 60 so as to turn the blades 61. By way of the shaft 64, a turning force is transmitted to the driving wheels 63 and 163, which advances the apparatus in a predetermined direction.

An ultrasonic motor is disclosed in US-A-4,533,219 (Katsuma et al), US-A-4,562,374 (Sashida) and EP-A2-325062 (Kasuga et al).

Known motor-driven apparatus of the kind described above employed coils which could not be made very small, tended to overheat, were liable to be damaged by excessive current, and could not control the direction of movement of the apparatus which could not be moved in reverse.

The object of the present invention is to solve these problems and to make a compact travelling equipment or motor-driven apparatus which does not require the use of a coil.

According to the present invention, there is provided motor driven apparatus comprising drivable surface-contact means engageable with a surface over which the apparatus is to be moved; at least one motor arranged to drive the surface-contact means so as to move the apparatus over the surface in a desired direction or directions; a driving circuit carried by the apparatus and arranged to output drive signals to the or each motor so as to control movement of the apparatus over the surface characterised in that the or each motor is an ultrasonic motor, the driving circuit being arranged to receive radio control signals from a remote location.

Thus the apparatus may employ two ultrasonic motors in parallel, each of which is controlled separately and is not provided with an electromagnetic device employing a coil.

The ultrasonic motor may comprise a vibrating member, a moving member and a pressure regulating member. Each of the two ultrasonic motors may be arranged to receive respective signals to travel freely in any direction. The apparatus may be provided with information gathering means and with means for transmitting the information either to the said remote location or directly to the driving circuit.

The apparatus may also be provided with finishing means for completing a manufacturing operation.

Furthermore, the apparatus may be provided with article carrying means.

The apparatus may comprise a plurality of separate motor-driven devices all of which are controlled by a common central control unit.

There may be a plurality of ultrasonic motors which are arranged to drive respective surface-contact means.

The invention is illustrated, merely by way of example, in the accompanying drawings, in which:-
Figure 1 is a diagram of a compact travelling equipment or motor-driven apparatus according to the present invention;
Figure 2 is a side view of a first embodiment of a compact travelling equipment or motor-driven apparatus according to the present invention;
Figure 3 is a sectional view taken on the line AOB of Figure 2;
Figure 4 is a sectional view of a prior art motor-driven apparatus;
Figure 5 is a front view of the prior art motor-driven apparatus of Figure 4;
Figure 6 is a sectional side view of another prior art motor-driven apparatus;
Figure 7 is a front view of the prior art motor-driven apparatus of Figure 6;
Figure 8 is a side view of a second embodiment of a compact travelling equipment or motor-driven apparatus according to the present invention;
Figure 9 is a sectional view taken on the lines AOB of the second embodiment of a compact travelling equipment or motor-driven apparatus according to the present invention;
Figure 10 is a side view of a third embodiment of a compact travelling equipment or motor-driven apparatus according to the present invention;
Figure 11 is a sectional view taken on the lines AOB of the third embodiment of a compact travelling equipment or motor-driven apparatus according to the present invention;
Figure 12 is a side view of a fourth embodiment of a compact travelling equipment or motor-driven apparatus according to the present invention;
Figure 13 is a side view of a fifth embodiment of a compact travelling equipment or motor-driven apparatus according to the present invention;
Figure 14 is a sectional view of the fifth embodiment of a compact travelling equipment or motor-driven apparatus according to the present invention;
Figure 15 is a sectional view of a sixth embodiment of a compact travelling equipment or motor-driven apparatus according to the present invention;
Figure 16 is a diagram illustrating central control of a compact travelling equipment or motor-driven apparatus according to the present invention;
Figure 17 is a side view of a seventh embodiment of a compact travelling equipment or motor-driven apparatus according to the present invention;
Figure 18 is a sectional view of the seventh embodiment of a compact travelling equipment or motor-driven apparatus according to the present invention; and
Figure 19 is a side view of an eighth embodiment of a compact travelling equipment or motor-driven apparatus according to the present invention.

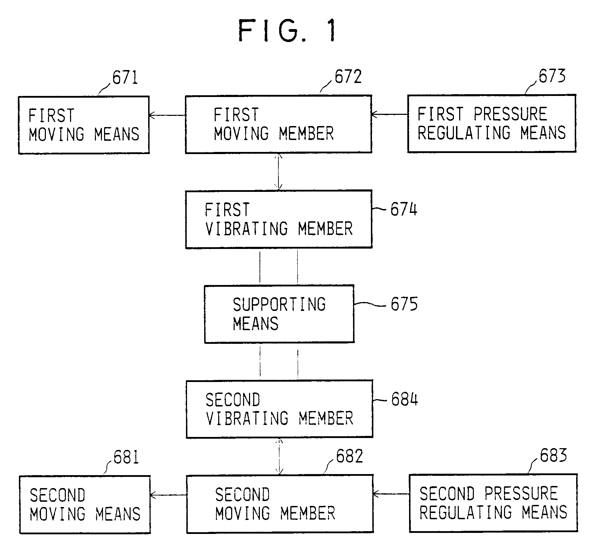

Figure 1 is a block diagram of a compact travelling equipment or motor-driven apparatus according to the present invention. A first vibrating member 674 is carried by a supporting means 675. A first moving member 672 has pressure applied to it by a first pressure regulating means 673 and is supported by the first vibrating member 674. Vibration generated by the first vibrating member 674 is transmitted to advance the first moving member 672. Movement of the first moving member 672 is transmitted to a first moving means 671. Movement of the first moving means 671 causes movement of the compact travelling equipment or motor-driven apparatus over the ground or other surface (not shown) in a desired direction or directions.

A second vibrating means 684 is carried by the supporting means 675. A second moving member 682, a second pressure regulating means 683 and a second moving means 681 operate in the same way as in the structure described in the previous paragraph so as to cause movement of the motor-driven apparatus in the opposite direction.

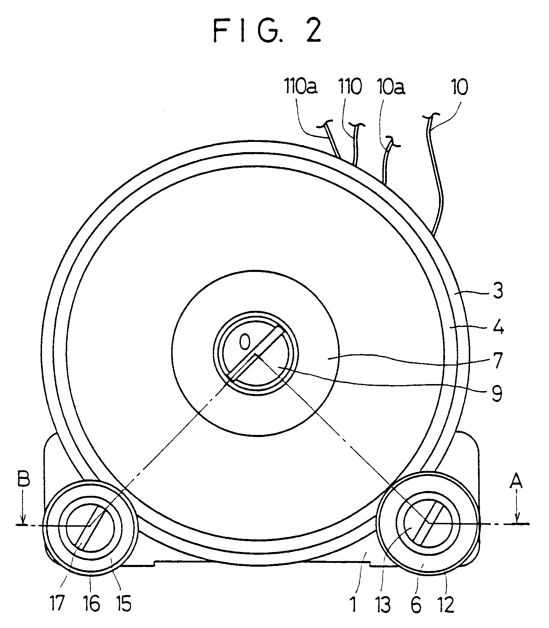

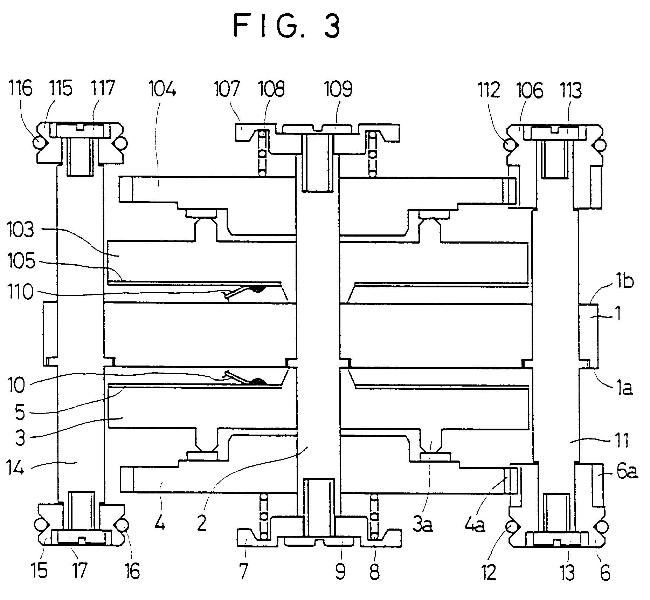

As shown in Figure 2, which is a side view, and Figure 3, which is a sectional view taken on the lines AOB of Figure 2, a first embodiment of the present invention comprises a motor axle 2, a driving axle 11, and a guide axle 14, all the axles 2, 11, 14 being fixed to a vibrating member supporting plate 1. On the side 1a of a first face of the vibrating member supporting plate 1, a vibrating member 3 is mounted on and fixed to the motor axle 2. The vibrating member 3 has a piezo electric element 5 fixed thereto. A movement-effecting or rotatable member 4 contacts the vibrating member 3 closely enough for the rotatable member 4 to be able to turn. The rotatable member 4 is mounted on the motor axle 2. A coil spring 8 is mounted concentrically about the motor axle 2, the coil spring 8 being interposed between the rotatable member 4 and a spring plate 7. The spring plate 7 is fixed to the motor axle 2 by a screw 9.

The driving axle 11 carries and drives a driving wheel 6 provided with a driving wheel rubber ground-engaging member 12 and is fitted with a driving wheel screw 13 for securing the driving wheel 6 in position. Instead of the driving wheel rubber ground-engaging member 12, a chain belt or a plurality of tyres may be used. A gear 6a of the driving wheel 6 meshes with a gear 4a of the rotatable member 4. The guide axle 14 supports a guide wheel 15 provided with a guide wheel rubber ground-engaging member 16, which can rotate. A guide wheel screw 17 is screwed into the guide axle 14 so as to retain the guide wheel 15 in position.

On the side 1b of the second face of the vibrating member supporting plate 1, there is mounted on the motor axle 2 a vibrating member 103 to which is secured a piezo-electric element 105. A movement-effecting or rotatable member 104, a coil spring 108, a spring plate 107, a spring plate screw 109, a driving wheel 106 provided with driving wheel rubber ground-engaging member 112, a driving wheel screw 113, a guide wheel 115 provided with a wheel rubber ground-engaging member 166, and a guide wheel screw 117, each of which is supported on the respective motor axle 2, driving axle 11 and guide axle 14, are constructed in the same way as the corresponding parts on the side 1a of the vibrating member supporting plate 1.

The following description relates to the operation of the said first embodiment. On the first side 1a of the vibrating member supporting plate 1, the piezo-electric element 5, which has been provided with electrode patterns by means of a prescribed polarization processing, is fixed in position. By means of a lead wire 10 and a lead wire 10a (Figure 2) connected to the piezo-electric element 5 from a driving circuit (not shown) on the motor-driven apparatus, a certain voltage is applied to the piezo-electric element 5, which causes the vibrating member 3 to vibrate. This causes vibration of comb-like projections 3a on the vibrating member 3 and this provides the force to turn the rotatable member 4 at a certain speed. The gear 4a of the rotatable member 4 engages with the gear 6a of the driving wheel 6 so as to drive the travelling equipment or motor-driven apparatus.

When the frequency of a voltage having a different phase is applied to the electrode patterns (not shown), the rotatable member 4 turns in the reverse direction and by transmitting drive to the driving wheel 6, the travelling equipment or motor-driven apparatus can move backwards.

Similarly, on the second side 1b of the vibrating member supporting plate 1, by way of a lead wire 110 and 110a (Figure 2) connected to the piezo-electric element 103, by applying a voltage of a certain frequency, a turning force is transmitted to the driving wheel 106. Thus in order to move the travelling equipment or motor-driven apparatus in different directions, the ultrasonic motors comprising the parts 3, 4 and 103, 104 on the first side 1a and the second side 1b of the vibrating member supporting plate 1 are respectively controlled to turn each wheel at a different speed.

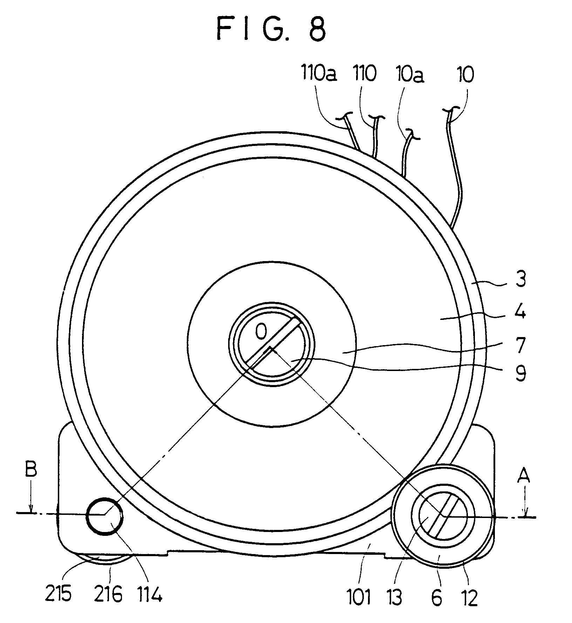

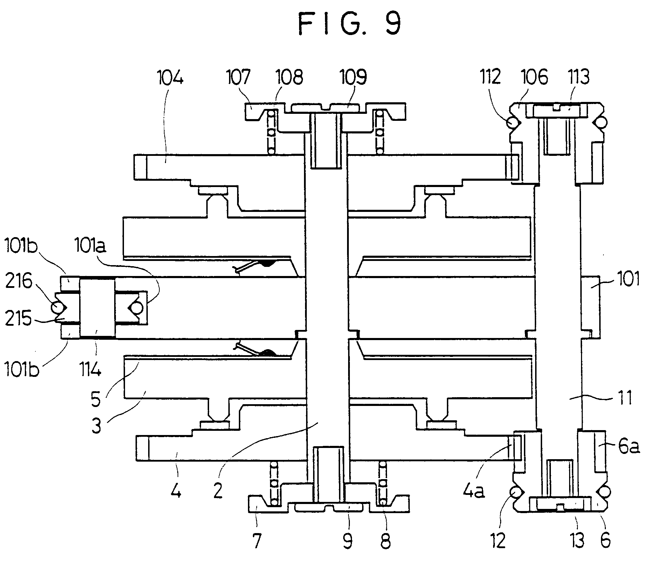

In Figure 8, which is a side view and Figure 9, which is a sectional view taken on the lines AOB of Figure 8, there is shown a second embodiment of the present invention. The main difference between the first and the second embodiments is that the structure of the second embodiment comprises a guide wheel 215 having a guide wheel rubber ground-engaging member 216 which is provided in a groove 101a of a vibrating member supporting plate 101. The guide wheel 215 is rotatably mounted on a guide axle 114, and both ends of the guide axle 114 are fixed in a vibrating member supporting plate 101b which is integral with the plate 101. A supporting means for vibrating members, rotatable members, means for applying pressure and movement effecting means are constructed similarly to the construction shown in Figure 3 of the first embodiment, like reference numerals indicating like parts. The structure of the second embodiment has only one guide wheel 215 and has three places of contact with the ground, which enables better ground contact.

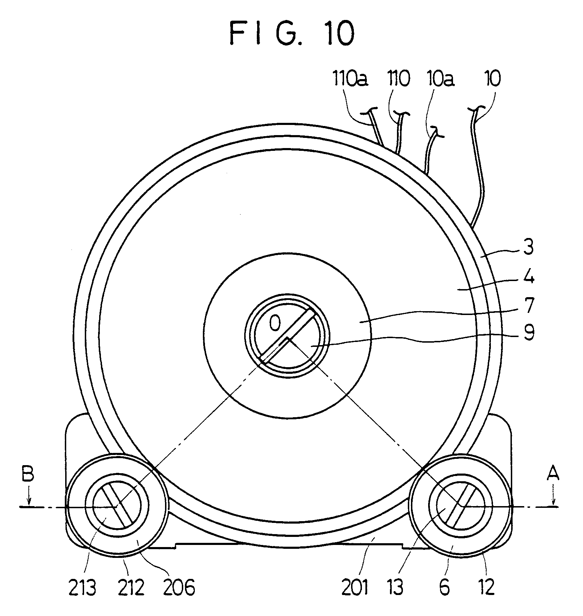

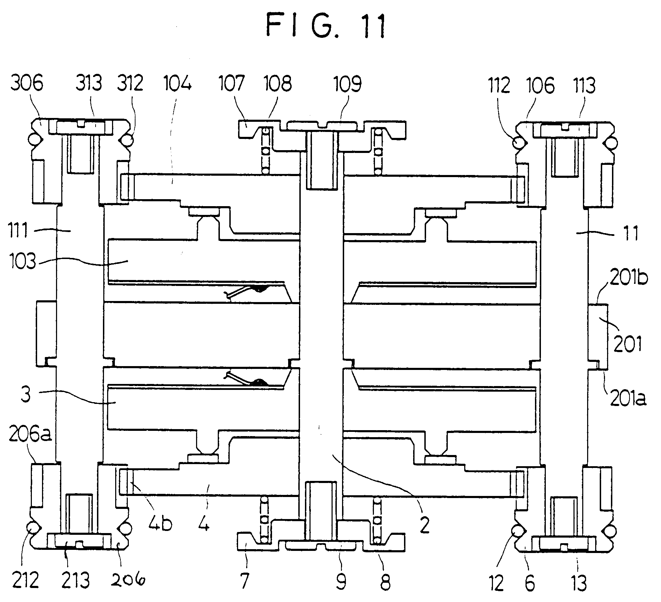

In Figure 10, which is a side view, and Figure 11 which is a sectional view taken on the lines AOB of Figure 10, there is shown a third embodiment of the present invention. The main differences between the first and the third embodiments are the following. A driving axle 111 is fixed to a vibrating member supporting plate 201. On a first side 201a of the vibrating member supporting plate 201, a driving wheel 206 having a driving wheel rubber ground-engaging member 212 is rotatably mounted on the driving axle 111. A gear 206a of the driving wheel 206 meshes with a gear 4b of the rotatable member 4. On the second side 201b of the vibrating member supporting plate 201, there is a structure which is the same as that on the first side. The said third embodiment has vibrating members, a supporting means and means for applying pressure and drive means similar to that of the structure shown in Figure 3 of the first embodiment. The construction of the third embodiment provides a four-wheel drive and enhances its ability to surmount obstacles. For example, even if one of the wheels is not in good contact with the ground, it can move in a stable manner.

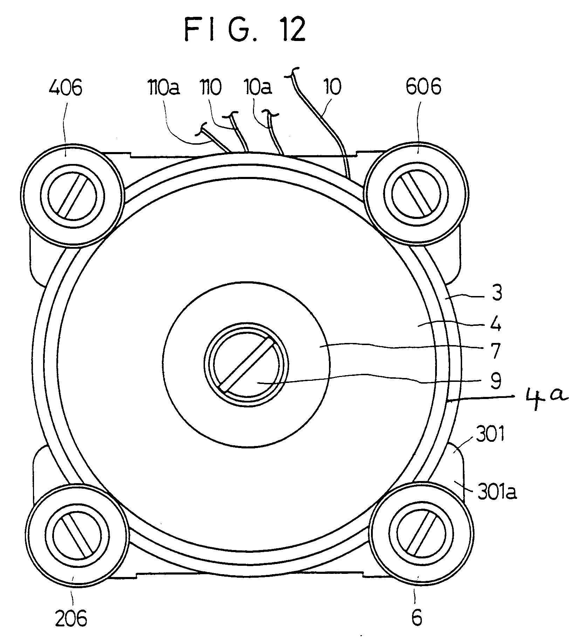

In Figure 12, there is shown a fourth embodiment of the present invention. The construction shown in Figure 12 has vibrating members, a supporting means for the vibrating member, means for applying pressure and a drive means similar to that of the structure shown in Figure 3 of the first embodiment. The main differences between the first and the fourth embodiments are the following. Four driving axles, along the circumference of a rotatable member 4, are fixed on a vibrating member supporting plate 301. On a first side 301a of the vibrating member supporting plate 301, driving wheels 6, 206, 406, and 606, which are respectively rotatably mounted on the said driving axles, respectively mesh with a gear 4a of the moving member 4. On the second side of the plate 301 which is not shown in Figure 12, the structure is the same as that on the first side thereof. The structure of the fourth embodiment provides an eight-wheel drive and stable ground contact. At least four of the eight wheels contact the ground to provide stable movement even if it falls forward or backward.

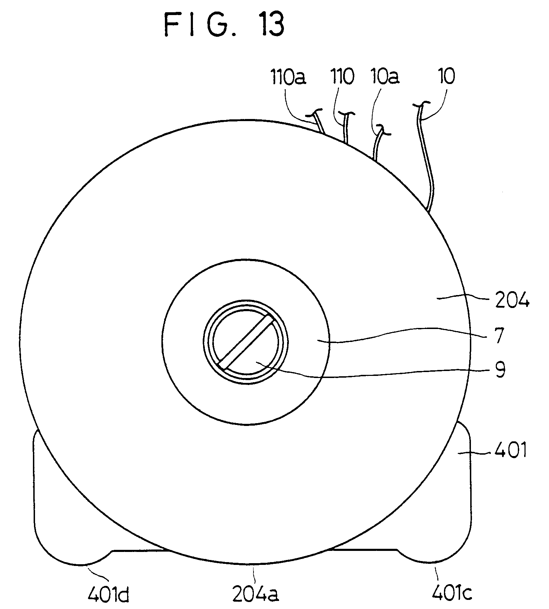

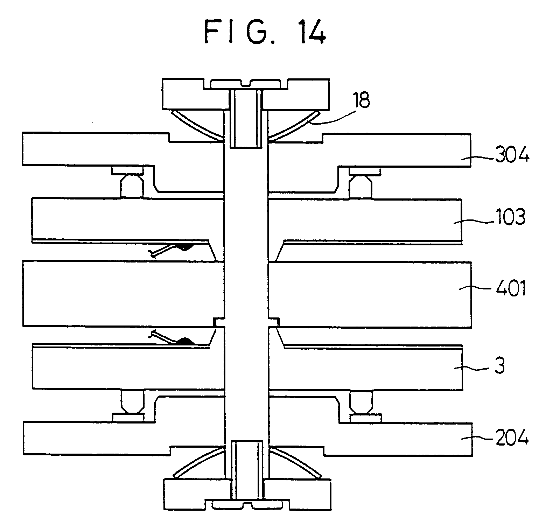

In Figure 13, which is a side view, and Figure 14, which is a sectional view, there is shown a fifth embodiment of the present invention. The fifth embodiment has vibrating members, a supporting means, means for applying pressure and drive means similar to that of the first embodiment shown in Figure 3. The main difference between the first and the fifth embodiment is the following. Some portion of circumference 204a of a rotatable member 204 contacts the ground and itself functions as a movement-effecting means. In order to prevent the rotatable member 204 from falling over in the direction of movement, projecting parts 401c and 401d are provided on each side of a vibrating member supporting plate 401. In this way, the moving member 204 directly contacts the ground and can transmit torque directly to the ground and cut torque losses.

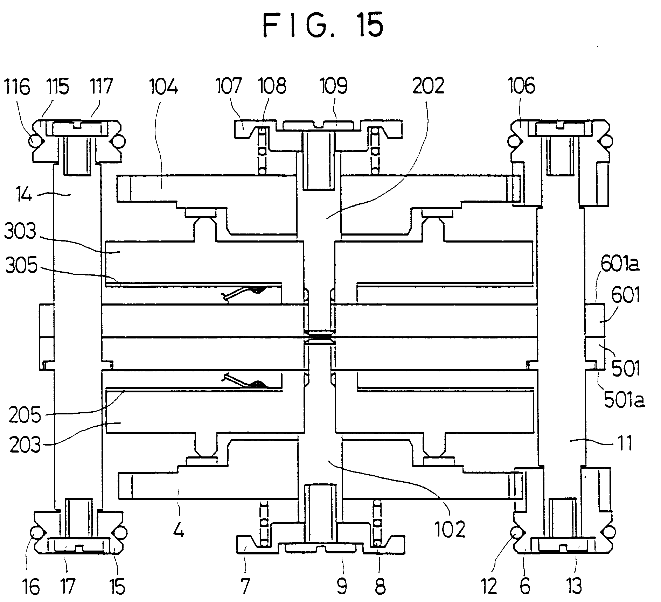

In Figure 15, there is shown a sixth embodiment of the invention. The main difference between the first and sixth embodiments is the following. A driving axle 11 and a guide axle 14 are fixed to a vibrating member supporting plate 501. On a first side 501a of the vibrating member supporting plate 501, a vibrating member 203, to which a piezo-electric element 205 is secured, is mounted on a motor axle 102 attached to the vibrating member supporting plate 501. A rotatable member 4 is rotatably mounted on the motor axle 102. A coil spring 8 mounted concentrically about the motor axle 102 is inserted between the rotatable member 4 and a spring plate 7. The spring plate 7 is secured to the motor axle 102 by a spring plate screw 9.

On the first side 601a of a vibrating member supporting plate 601, a vibrating member 303, to which is secured a piezo-electric element 305, is mounted on the motor axle 102 attached to the vibrating member supporting plate 601. A rotatable member 104 is rotatably mounted on the motor axle 202. A coil spring 108, mounted concentrically about the motor axle 202, is inserted between the rotatable member 104 and a spring plate 107. The spring plate 107 is secured to the motor axle 202 by a screw 109.

As described above, an ultrasonic motor unit at the vibrating member supporting plate 601 is fixed between the driving axle 11 and the guide axle 14 and is firmly secured to the vibrating member supporting plate 501. The moving means and the other structures of the said sixth embodiment are the same as those of the first embodiment. The sixth embodiment makes assembly, disassembly and replacement of defective parts easier. In the construction of this embodiment, two ultrasonic motors are used and driven respectively. It is possible for the construction to have four, independently driven, driving wheels. In the four-wheel construction, the four wheels are constantly in contact with the ground to permit stable movement and easier change of direction. It is also possible for the construction to have six ultrasonic motors.

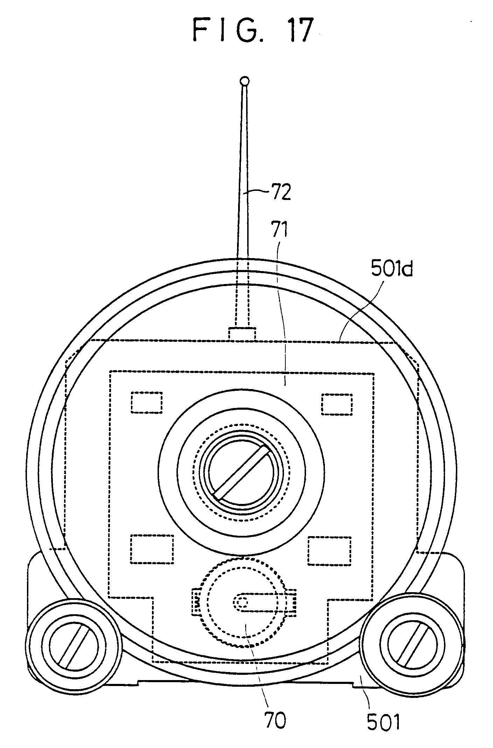

Each of the previously described embodiments is provided with a driving circuit carried by the apparatus and arranged to output drive signals to the ultrasonic motors so as to control movement of the apparatus over the ground, the driving circuit being arranged to receive radio control signals from a remote location. Although these components are not shown in the drawings of these embodiments, they may be as illustrated in Figure 17 described below.

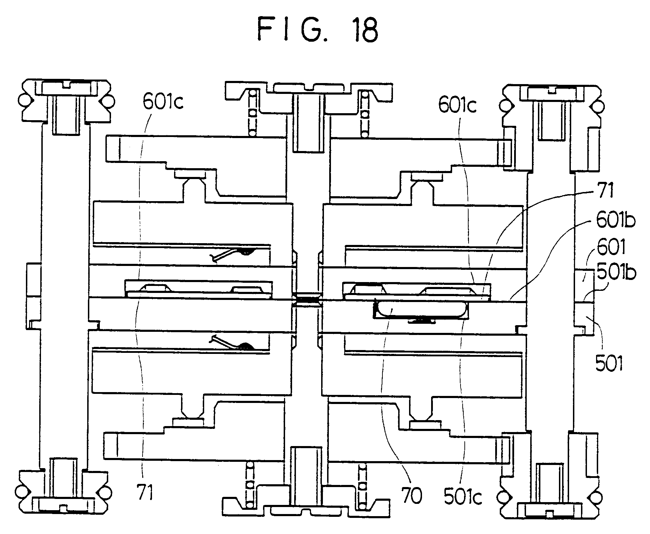

In Figure 17, which is a side view, and in Figure 18, which is a sectional view, there is shown a seventh embodiment of the present invention. The structures to support the vibrating members and the movement-effecting members and the regulation and movement structures are substantially the same as the structures shown in Figure 15, the sixth embodiment. The main differences between the sixth and the seventh embodiment are the following. A vibrating member supporting plate 501 has a countersunk portion 501c where a power source 70 is housed. On the side 501b of the vibrating member supporting plate 501, there is fixed a driving circuit 71. The power source 70 is electrically connected to the driving circuit 71. The side 601b of the vibrating member supporting plate 601 has a countersunk portion 601c where the driving circuit 71 is housed. On the upper side 501d of the vibrating member supporting plate 501, there is fixed an antenna 72 for wireless communication, the antenna being connected to the driving circuit 71. As described above, a compact travelling equipment or motor-driven apparatus carries the power source 70 and the driving circuit 71 inside of which a radio communication circuit is built in. Signals received by the antenna 72 are amplified and modulated by a receiving circuit not shown. Output signals from the receiving circuit are then transmitted to the driving circuit 71 for a compact travelling equipment to travel freely in any direction without wire, i.e. by radio communication. Moreover each respective movement of a plurality of compact travelling equipments or motor-driven apparatus of the invention may all be controlled by a central unit.

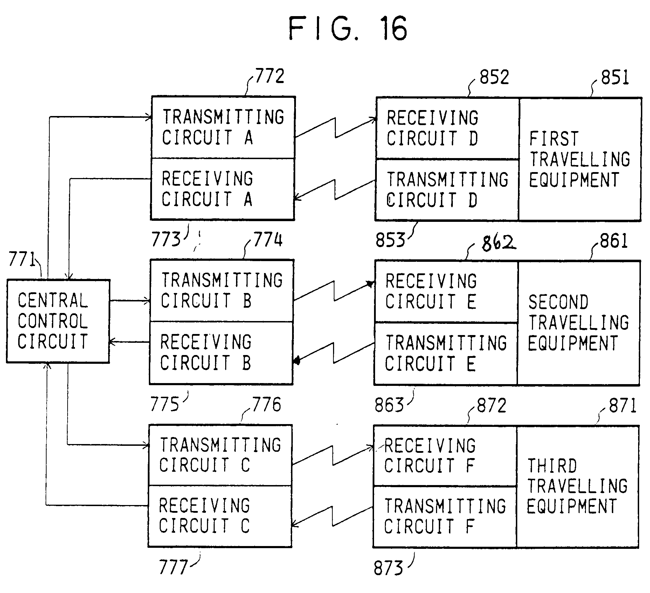

As shown in Figure 16, signals to control movements of a plurality of compact travelling equipments are generated from a central control circuit 771 and sent to three transmitting circuits A, B, C (which are also referenced 772, 774, 776), and information from the compact travelling equipments is inputted into three receiving circuits A, B, C (also referenced 773, 775 and 777). A signal generated from the receiving circuit A772 is inputted into a receiving circuit D852 for a first travelling equipment 851. Then, information on the operational condition of the first travelling equipment 851 is sent from a transmitting circuit D853 to the receiving circuit A773. Similarly, information on a second travelling equipment 861 is sent from the transmitting circuit B774 to a receiving circuit E862, and then from a transmitting circuit E863 to the receiving circuit B775. In the same way, information on a third travelling equipment 871 is similarly handled. As described above, the central control circuit 771 enables the respective movements of a plurality of travelling equipments to be controlled through information flow within the structure.

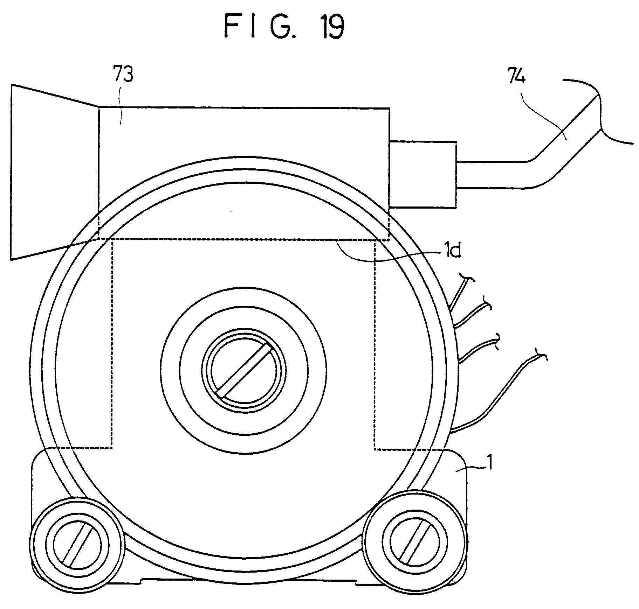

In Figure 19, which is a side view, there is shown an eighth embodiment of the present invention. Structures to support vibrating members and movement-effecting members, and the pressure regulation and movement structures are the same as those shown in Figure 3, the first embodiment. The main differences between the first and the eighth embodiments are the following. On the upper side 1d of a vibrating member supporting plate 1, there is fixed a CCD camera 73 facing in the direction of movement. Input pictures, i.e. pictures taken by the CCD camera 73, can be displayed by a monitor, not shown, which is connected to the CCD camera 73 through a cord 74. This embodiment enables internal inspection for use in examining precision instruments, and can be used as a safety arrangement by carrying a sensor for carbon dioxide or other gas.

Furthermore, a compact travelling equipment or motor-driven apparatus carrying a small welding machine or an adhesive supply instrument can be used as a compact finishing machine for finishing a manufacturing operation. And a compact travelling equipment or motor-driven apparatus can be used as a carrier. The present invention is suitable for the above applications because an ultrasonic motor used in a compact travelling equipment or motor driven apparatus is not affected by external magnetic fields, does not need oxygen for its operation, and has no spark caused by controlling current. The use of two ultrasonic motors each of which receives respective signals enables it to travel freely in any direction.

## Claims

1. Motor-driven apparatus comprising drivable surface-contact means (6,106) engageable with a surface over which the apparatus is to be moved; at least one motor (3,4; 103,104) arranged to drive the surface-contact means (6,106) so as to move the apparatus over the surface in a desired direction or directions; a driving circuit (71) carried by the apparatus and arranged to output drive signals to the or each motor (3,4; 103,104) so as to control movement of the apparatus over the surface characterised in that the or each motor is an ultrasonic motor, the driving circuit (71) being arranged to receive radio control signals from a remote location.

2. Motor-driven apparatus as claimed in claim 1 characterised in that the apparatus is provided with information gathering means (73) and with means for transmitting the information either to the said remote location or directly to the driving circuit (71).

3. Motor-driven apparatus as claimed in claim 1 or 2 characterised in that the apparatus is provided with finishing means for completing a manufacturing operation.

4. Motor-driven apparatus as claimed in any preceding claim characterised in that the apparatus is provided with article carrying means.

5. Motor-driven apparatus as claimed in any preceding claim characterised in that the apparatus comprises a plurality of separate motor-driven devices (851,861,871) all of which are controlled by a common central control unit (771).

6. Motor-driven apparatus as claimed in any preceding claim characterised in that there are a plurality of ultrasonic motors (3,4; 103,104) which are arranged to drive respective surface-contact means (6,106).

7. A traveller with ultrasonic motor comprising:
supporting means (675) for supporting an ultrasonic motor;
a first vibrating member (674) carried by said supporting means (675) for generating vibration;
a first moving member (672) supported by said first vibrating member (674);
first pressure regulating means (673) for applying pressure to said first vibrating member (674) and said first moving member (672);
first moving means (671) turned by said first moving member (672) and engageable with the ground;
a second vibrating member (684) carried by said supporting means (675) for generating vibration;
a second moving member (682) supported by said second vibrating member (684);
second pressure regulating means (683) for applying pressure to said second vibrating member (684) and said second moving member (682);
second moving means (681) turned by said second moving member (682) and engageable with the ground; and
a driving circuit for outputting signals to said first vibrating member (674) and said second vibrating member (684) respectively.

8. A traveller as claimed in claim 7: further comprising at least inspecting means (73) for gathering information, sensing means for sensing the surroundings, a welding machine, or an adhesive supply instrument.

9. A traveller system comprising:
a plurality of travellers which comprise
supporting means for supporting an ultrasonic motor,
a first vibrating member carried by said supporting means for generating vibration,
a first moving member supported by said first vibrating member,
first pressure regulating means for applying pressure to said first vibrating member and said first moving member,
first moving means turned by said first moving member and engageable with the ground,
a second vibrataing member carried by said supporting means for generating vibration,
a second moving member supported by said second vibrating member,
second pressure regulating means for applying pressure to said second vibrating member and said second moving member,
second moving means turned by said second moving member and engageable with the ground,
a driving circuit for outputting signals to said first vibrating member and said second vibrating member respectively; and
controlling means for generating signals to control said travellers and for receiving gathered information from said travellers.

10. A traveller as claimed in claim 9 wherein:
said first moving member comprises four driving wheels along the circumference of said first moving member; and said second moving member comprises four driving wheels along the circumference of said second moving member.

11. A traveller as claimed in any of claims 7-10 wherein:
said first moving member contacts the ground;
said second moving member contacts the ground;
said first moving means is provided on said first vibrating member; and
said second moving means is provided on said second vibrating member.
